# EUROPEAN PATENT APPLICATION

(11) **EP 4 560 416 A1**
(43) Date of publication of application: **28.05.2025**
(21) Application number: 23211845.5
(22) Date of filing: 23.11.2023
(51) Int. Cl.: G05B 19/042

(54) **METHOD FOR MONITORING AN ACCESS POINT**

(71) Applicant: dormakaba Schweiz AG, 8623 Wetzikon (CH)
(72) Inventor: RAPPEL, Christian, 8006 Zürich (CH); MICHEL, François, 3963 Crans-Montana (CH)
(74) Representative: Balder IP Law, S.L.

(57) **Abstract**

The invention concerns a method 100 for monitoring an access point 2, wherein the access point 2 includes an access gate 3, the method 100 comprising: receiving 101, by a computing arrangement 4, sensor data from at least one a sensor (10-13), preferably a plurality of sensors, the sensor(s) 10-13 being configured to obtain information regarding the operation and/or state of the access point 2, processing 103, by the computing arrangement 4, the received sensor data, to discover conflicting sensor data within the received sensor data, and deriving 104, by the computing arrangement 4, misadjustment information based on the discovered conflicts.

## Description

The invention concerns a method for monitoring an access point, wherein the access point includes an access gate. Further, the invention concerns a computer program comprising instructions, which, when the program is executed on a computing arrangement, cause the computing arrangement to carry out the method. Further, the invention concerns the computing arrangement, in particular including server system(s) and/or cloud platform(s), wherein the computing arrangement is adapted to carry out the method. Moreover, the invention concerns a system comprising the computer program and/or the computing arrangement. And the invention concerns at least one training method related to the method for monitoring the access point.

It is an object of the present invention to provide a method, a computer program, a computing arrangement, a system, and a training method that enable safe operation and easy maintenance of an access point.

The features of the independent claims solve the object of the invention. The dependent claims provide advantages embodiments of the invention.

This disclosure uses the term computing arrangement as a generic term for a single computer or any number of networked computers. In this context, proprietary control devices are also regarded as computers. The individual computers may be located at any position. All or some of the computers may be servers or cloud computers.

The object is solved by a method for monitoring an access point, wherein the access point includes an access gate.

The access gate is preferably adapted for buildings, which includes the use of the access gates directly in buildings as well as in enclosures, for example in fences or walls. The access gate is preferably a door, a gate, a turnstile, or another barrier.

The access point comprises the access gate and can additional comprise at least one access gate peripheral device. The access gate peripheral device is preferably located in close proximity to the access gate. It is further preferred that the access gate peripheral device is connected to the access gate to: unidirectional or bidirectional exchange data between the access gate peripheral device and the access gate, and/or to apply mechanical force to the access gate.

The respective access gate peripheral device preferably is a door closer, a door drive, a lock, or a camera.

The inventive method comprises:
(i) Receiving, by the computing arrangement, sensor data from at least one sensor, preferably a plurality of sensors. Plurality of sensor means two or more sensors. The sensor(s) being configured to obtain information regarding the operation and/or state of the access point.
(ii) Processing, by the computing arrangement, the received sensor data, to discover conflicting sensor data within the received sensor data. In particular, contradictory sensor data is regarded as conflicting sensor data. In particular, it is checked whether the data from the sensor(s) logically match or not. If only one sensor is used, data at different points in time must be processed in order to find conflicts.
(iii) After processing the received sensor date, the computing arrangement derives misadjustment information based on the discovered conflicts; which means based on the discovered conflicting sensor data.

Preferably, the method derives mechanical misadjustment information and/or software misadjustment information; which means that the access point, preferably the access gate, is subject to a mechanical misadjustment and/or software misadjustment. The software misadjustment information can include information about misconfiguration (wrong configuration) of any operating software of the access point.

An example for mechanical misadjustment is as follows: A first sensor, e.g. in the door drive or in the door closer, detects the position of the door - i.e. detects whether the door is closed. A second sensor in the door frame also detects whether the door is closed. If the first sensor indicates that the door is closed, but the second sensor does not, mechanical misadjustment information can be derived, e.g. that the door frame is too large for the door.

An example for software misadjustment is as follows: a sensor detects that the door opens and closes continuously within seconds. A comparison with the stored target behavior of the door leads to the conclusion that there may be an incorrect configuration of the operation program, i.e. a software misadjustment.

Preferably, sensor data from at least two sensors indicating the position of the access gate is received and processed.

Preferably, the processed sensor data is received from an angle sensor for detecting the angle of the access gate, in particular the angle sensor is positioned in a door closer, door drive, or door hinge.

Preferably, the processed sensor data is received from an access gate contact sensor, which is actuated by contact with the access gate.

Preferably, the processed sensor data is received from a lock contact sensor, which is actuated by the lock of the access gate.

Preferably, the processed sensor data is received from a camera detecting the position of the access gate.

Preferably, the sensor data itself and/or the difference between two senor data is compared with stored values, to discover the conflicting sensor data. The difference between to sensor data can mean for example, that one sensor detects an opening angle of the access gate of x° and other sensor detects an opening angle of y° at the same time. If the difference between x and y is greater than a stored value, it can be concluded that a certain misadjustment is present.

Preferably, a machine-learning model is used by the computing arrangement in the step of processing the received sensor data, to discover conflicting sensor data within the received sensor data. In particular a machine-learning model is used, which was trained by historical sensor data and corresponding misadjustment information. In other words, historical sensor data labeled with corresponding misadjustment information was used to train the machine-learning model.

Preferably, the method further comprises a step of pre-processing, by the computing arrangement, the received sensor data. The pre-processing is performed after the step of receiving and before the step of processing. In particular the pre-processing is adapted to include time-synchronization, and/or to reduce the data volume to be processed by deleting irrelevant information parts of the sensor data.

Preferably, a machine-learning model is used by the computing arrangement in the step of pre-processing the received sensor data. In particular, a machine-learning model is used, which was trained by labelled sensor data including labels which information parts in the sensor data are irrelevant and/or which are relevant.

Preferably, the method further comprises the step of generating, by the computing arrangement, advised adjustment for the access point based on the derived misadjustment information. The generated advised adjustment can include specific recommendations for action that can be taken to correct the misadjustment.

The advised adjustment can preferably comprise an advised mechanical adjustment to be performed by service technician at the access point, e.g. at the access gate.

The advised adjustment can preferably comprise a message regarding a software-update to be performed at the access point.

The advised adjustment can preferably comprise a message regarding a reset to be performed at the access point.

The advised adjustment can preferably comprise a message regarding a change of configuration to be performed at the access point.

Preferably, the method further comprises the step of performing at least one of the advised adjustments at the access point. The performing of the respective advised adjustment can be done automatic, i.e. without the intervention of a person, or semi-automatic, i.e. with confirmation by a person, or manual by a person.

Preferably, a template, in particular a digital twin, for the access point is stored in the computing arrangement. Preferably, the template is updated based on the performed advised adjustment. Preferbaly the deriving of misadjustment information is based on the discovered conflicts and additionally under consideration of the template, in particular the digital twin.

The invention further comprise a computer program comprising instructions, which, when the program is executed on the computing arrangement, cause the computing arrangement to carry out the above mentioned method according to any of the options described herein and/or defined in the claims.

In particular, the computer program comprising instructions, which, when the program is executed on the computing arrangement, cause the computing arrangement to:
(i) Receive, by the computing arrangement, e.g. by an appropriate interface, sensor data from the at least one sensor, preferably a plurality of sensors, the sensor(s) being configured to obtain information regarding the operation and/or state of the access point; the definition of the access point is explained above in the context of the method.
(ii) Process, by the computing arrangement, the received sensor data, to discover conflicting sensor data within the received sensor data.
(iii) Derive, by the computing arrangement, misadjustment information based on the discovered conflicts.

Preferably, the computer program comprising instructions, which, when the program is executed on the computing arrangement, cause the computing arrangement to perform at least one of the advised adjustments at the access point. Wherein, regarding the inventive computer program, performing of the respective advised adjustment can be done automatic, i.e. without the intervention of a person, or semi-automatic, i.e. with confirmation by a person.

The invention further comprise a computing arrangement. The computing arrangement is adapted to carry out the above mentioned method according to any of the options described herein and/or defined in the claims.

In particular, the computing arrangement is adapted to carry out following steps:
(i) Receiving, by the computing arrangement, e.g. by an appropriate interface, sensor data from the at least one sensor, preferably a plurality of sensors, the sensor(s) being configured to obtain information regarding the operation and/or state of the access point; the definition of the access point is explained above in the context of the method.
(ii) Processing, by the computing arrangement, the received sensor data, to discover conflicting sensor data within the received sensor data.
(iii) Deriving, by the computing arrangement, misadjustment information based on the discovered conflicts.

Preferably, the computing arrangement comprises interface means adapted to receive the sensor data from an angle sensor for detecting the angle of the access gate, in particular the angle sensor is positioned in a door closer, door drive, or door hinge.

Preferably, the computing arrangement comprises interface means adapted to receive the sensor data from an access gate contact sensor, which is actuated by contact with the access gate.

Preferably, the computing arrangement comprises interface means adapted to receive the sensor data from a lock contact sensor, which is actuated by the lock of the access gate.

Preferably, the computing arrangement comprises interface means adapted to receive the sensor data from a camera detecting the position of the access gate.

Preferably, the computing arrangement comprises interface means adapted to perform at least one of the advised adjustments at the access point. Wherein, regarding the inventive computing arrangement, performing of the respective advised adjustment can be done automatic, i.e. without the intervention of a person, or semi-automatic, i.e. with confirmation by a person.

The invention may further comprise a system, in particular distributed system. The system can be defined in two ways, so that the system includes either (i) the computer program according to any of the options described herein and/or defined in the claims executed on the computing arrangement, or (ii) the computing arrangement according to any of the options described herein and/or defined in the claims adapted to carry out the method according to any of the options described herein and/or defined in the claims.

Further, the system comprises the at least one sensor, preferably the plurality of sensors, which sensor data is received according to the method by the computing arrangement. The sensor(s) being configured to obtain information regarding the operation and/or state of the access point.

Preferably, the system comprises an angle sensor for detecting the angle of the access gate; in particular the angle sensor is positioned in a door closer, door drive, or door hinge.

Preferably, the system comprises an access gate contact sensor, which is actuated by contact with the access gate.

Preferably, the system comprises a lock contact sensor, which is actuated by the lock of the access gate.

Preferably, the system comprises a camera detecting the position of the access gate.

Preferably, the system comprises the access point as defined in context of the above explained method for monitoring the access point.

Further, the invention may comprise a first training method for a method for monitoring the access point, wherein the access point includes an access gate. In particular, the first training method is adapted for the method monitoring the access point according to any of the options described herein and/or defined in the claims.

The first training method comprising the following steps:
(i) Receiving, by the computing arrangement, sensor data from a sensor, preferably a plurality of sensors, the sensor(s) being configured to obtain information regarding the operation and/or state of the access point;
(ii) Training a machine-learning model based on the received sensor data as "historical sensor data" by assigning corresponding misadjustment information to the historical sensor data.

Further, the invention may comprise a second training method for the method monitoring the access point according to any of the options described herein and/or defined in the claims, including the step of pre-processing, by the computing arrangement, the received sensor data. The second training method comprising the following steps: training a machine-learning model by labelled sensor data including labels which information parts in the sensor data are irrelevant and/or which are relevant.

The following describes the invention in more detail with reference to an embodiment.
- Fig. 1: a schematic view of an inventive system including the inventive computing arrangement according to an embodiment of the invention,
- Fig. 2: a schematic view of a method and computer program for monitoring an access point according to the embodiment of the invention, and
- Fig. 3: a schematic view of a training method according to the embodiment of the invention.

All explanations, optional features and other characteristics described above, in particular in the general part of the description, as well as the features described in the claims apply in particular to the embodiment - with regard to the method for monitoring an access point, to the computer program, to the computing arrangement, to the system, and to the training method.

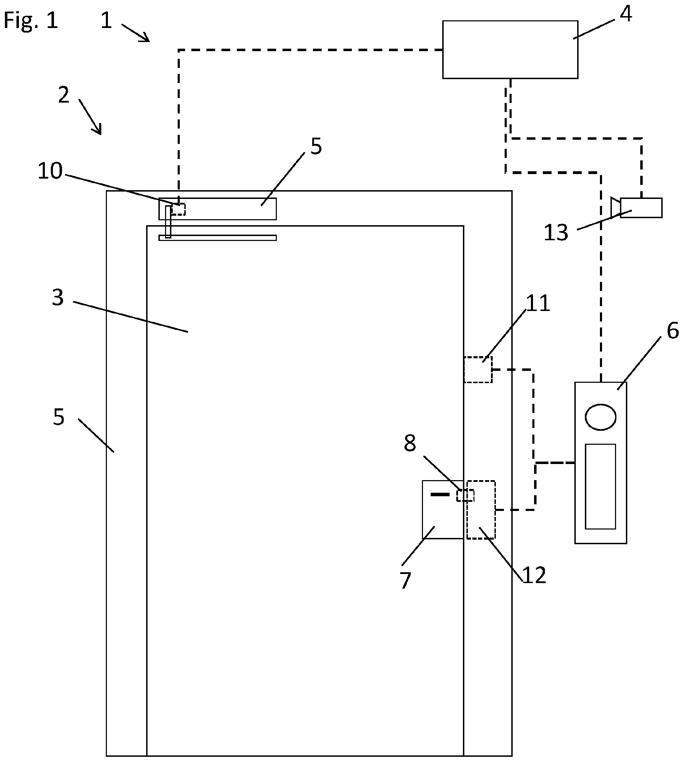

Fig. 1 shows a system 1 according to the embodiment. The embodiment shows a distributed system, where a computing arrangement 4 of the system 1 is not located in the proximity of an access point 2 of the system 1.

The computing arrangement 4 of the embodiment can be a single computer or any number of networked computers. In this context, proprietary control devices are also regarded as computers. The individual computers may be located at any position. All or some of the computers may be servers or cloud computers.

The access point 2, preferably positioned in a building, can comprise an access gate 3, like a door in a doorframe 5, and several access gate peripheral devices, e.g. a door closer 5, a door terminal 6 for controlling the access point 2, and a door lock 7.

Further, the system 1 according to the embodiment can comprise several sensors:
An angle sensor 10 for detecting the angle of the access gate 3. According to the embodiment, the angle sensor 10 is positioned in the door closer 5.

An access gate contact sensor 11, which is actuated by contact with the access gate 3.

A lock contact sensor 12, which is actuated by the lock 8 of the access gate 3. According to the embodiment, the lock contact sensor 12 can be actuated by a lock latch 8 of the lock 7.

A camera 13 detecting the position of the access gate 3.

As shown in Fig. 1, all sensors 10-13 are connected to the computing arrangement 4. The connection can be direct or indirect, e.g. via the door terminal 6. The connection can be wireless or wired.

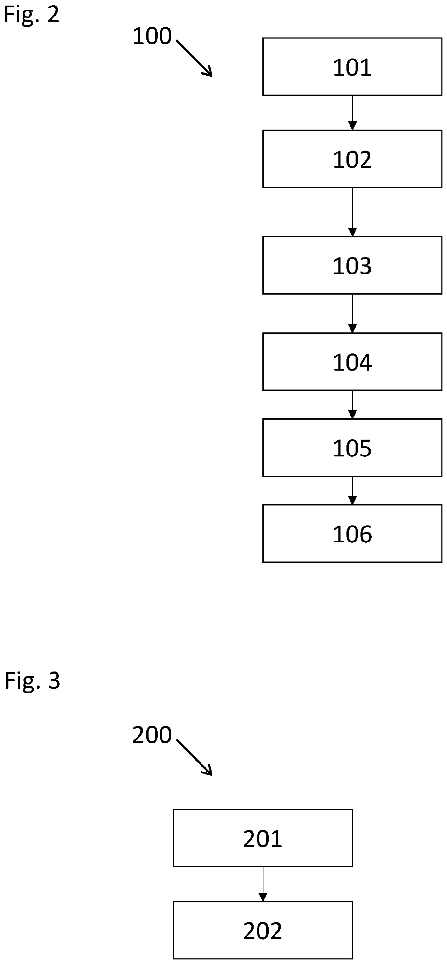

Fig. 2 shows a method 100 for monitoring the access point 2 according to Fig. 1, the method 100 as well as the computer program running on the computing device 4 comprising following steps according to the embodiment:
Receiving 101, by the computing arrangement 4, sensor data from the at least one a sensor 10-13, preferably a plurality of sensors 10-13, the sensor(s) 10-13 being configured to obtain information regarding the operation and/or state of the access point 2.

Pre-processing 102 (as optional step), by the computing arrangement 4, the received sensor data; in particular to include time-synchronization, and/or to reduce data volume to be processed by deleting irrelevant information parts of the sensor data.

Processing 103, by the computing arrangement 4, the received sensor data, to discover conflicting sensor data within the received sensor data.

Deriving 104, by the computing arrangement 4, misadjustment information based on the discovered conflicts.

Generating 105 (as optional step), by the computing arrangement 4, advised adjustment for the access point 2 based on the derived misadjustment information; in particular wherein the advised adjustment comprises a message regarding: an advised mechanical adjustment to be performed by service technician at the access point 2, and/or a software-update to be performed at the access point 2, and/or a reset to be performed at the access point 2, and/or a change of configuration to be performed at the access point 2.

Performing 106 (as optional step) the advised adjustment at the access point 2.

According to the embodiment, sensor data from at least two sensors 10-13 indicating the position of the access gate 3 can be received and processed.

According to the embodiment, in case of at least certain conflicts discovered in the sensor data, it is derived as "misadjustment information" that the access gate 3 is subject to a mechanical misadjustment.

According to the embodiment, the sensor data itself and/or the difference between two senor data is compared with stored values, to discover the conflicting sensor data.

According to the embodiment, a machine-learning model can be used by the computing arrangement 4 in the step of processing 103 the received sensor data, to discover conflicting sensor data within the received sensor data; in particular wherein a machine-learning model is used, which was trained by historical sensor data and corresponding misadjustment information.

According to the embodiment, a machine-learning model can be used by the computing arrangement 4 in the step of pre-processing 102 the received sensor data; in particular wherein a machine-learning model is used, which was trained by labelled sensor data including labels which information parts in the sensor data are irrelevant and/or which are relevant.

According to the embodiment, a template, in particular a digital twin, for the access point 2 can be stored in the computing arrangement 4, wherein the template is updated based on the performed advised adjustment, and/or wherein the deriving of misadjustment information is based on the discovered conflicts and additionally under consideration of the template, in particular the digital twin.

The computing arrangement 4 according to the embodiment executes a computer program comprising instructions, which, when the program is executed on the computing arrangement 4, cause the computing arrangement 4 to carry out the method 100.

Fig. 3 shows according to the embodiment steps of a training method 200 for the method 100 for monitoring the access point 2. The training method 200 comprising the following steps:
Receiving 201, by the computing arrangement 4, sensor data from the at least one sensor 10-13, preferably a plurality of the sensors.

Training 202 a machine-learning model based on the received sensor data as "historical sensor data" by assigning corresponding misadjustment information to the historical sensor data.

### List of reference signs

1 system
2 access point
3 access gate
4 computing arrangement
5 door closer
6 door terminal
7 door lock
8 lock latch
10 angel sensor
11 access gate contact sensor
12 lock contact sensor
13 camera
100 method for monitoring an access point
101-106 method steps
200 training method
201-202 method steps

## Claims

1. A method (100) for monitoring an access point (2), wherein the access point (2) includes an access gate (3), the method (100) comprising:
• receiving (101), by a computing arrangement (4), sensor data from at least one a sensor (10-13), preferably a plurality of sensors, the sensor(s) (10-13) being configured to obtain information regarding the operation and/or state of the access point (2),
• processing (103), by the computing arrangement (4), the received sensor data, to discover conflicting sensor data within the received sensor data, and
• deriving (104), by the computing arrangement (4), misadjustment information based on the discovered conflicts.

2. Method according to claim 1, wherein sensor data from at least two sensors (10-13) indicating the position of the access gate (3) is received and processed.

3. Method according to claim 2, wherein, in case of at least certain conflicts discovered in the sensor data, it is derived as "misadjustment information" that the access gate (3) is subject to a mechanical misadjustment.

4. Method according to any preceding claim, wherein sensor data from following sensors (10-13) are received and processed:
• an angle sensor (10) for detecting the angle of the access gate (3), in particular the angle sensor (10) is positioned in a door closer (5), door drive, or door hinge,
• and/or an access gate contact sensor (11), which is actuated by contact with the access gate (3),
• and/or a lock contact sensor (12), which is actuated by the lock 8 of the access gate (3),
• and/or a camera (13) detecting the position of the access gate (3).

5. Method according to any preceding claim, wherein the sensor data itself and/or the difference between two senor data is compared with stored values, to discover the conflicting sensor data.

6. Method according to any preceding claim, wherein a machine-learning model is used by the computing arrangement (4) in the step of processing the received sensor data, to discover conflicting sensor data within the received sensor data; in particular wherein a machine-learning model is used, which was trained by historical sensor data and corresponding misadjustment information.

7. Method according to any preceding claim, wherein the method further comprising the step:
pre-processing (102), by the computing arrangement (4)(, the received sensor data; in particular to include time-synchronization, and/or to reduce data volume to be processed by deleting irrelevant information parts of the sensor data.

8. Method according to claim 7, wherein a machine-learning model is used by the computing arrangement (4) in the step of pre-processing (102) the received sensor data; in particular wherein a machine-learning model is used, which was trained by labelled sensor data including labels which information parts in the sensor data are irrelevant and/or which are relevant.

9. Method according to any preceding claim, wherein the method further comprising the step:
generating (105), by the computing arrangement (4), advised adjustment for the access point (2) based on the derived misadjustment information; in particular wherein the advised adjustment comprises a message regarding:
• an advised mechanical adjustment to be performed by service technician at the access point (2),
• and/or a software-update to be performed at the access point (2),
• and/or a reset to be performed at the access point (2),
• and/or a change of configuration to be performed at the access point (2).

10. Method according to claim 9, wherein the method further comprising the step:
• performing (106) the advised adjustment at the access point (2).

11. Method according to any preceding claim, wherein a template, in particular a digital twin, for the access point (2) is stored in the computing arrangement (4),
• wherein the template is updated based on the performed advised adjustment,
• and/or wherein the deriving of misadjustment information is based on the discovered conflicts and additionally under consideration of the template, in particular the digital twin.

12. Computer program comprising instructions, which, when the program is executed on the computing arrangement (4), cause the computing arrangement (4) to carry out the method (100) of any preceding claim.

13. Computing arrangement (4), in particular including server system(s) and/or cloud platform(s), wherein the computing arrangement (4) is adapted to carry out the method (100) of any one of claims 1 to 11.

14. System (1), in particular distributed system,
• comprising the computer program according to claim 12 executed on the computing arrangement (4), or the computing arrangement (4) according to claim 13 adapted to carry out the method (100) of any one of claims 1 to 12,
• and comprising at least one sensor (10-13), preferably a plurality of sensors, which sensor data is received according to the method (100) by the computing arrangement (4), the sensors (10-13) being configured to obtain information regarding the operation and/or state of the access point (2);
• and preferably comprising the access point (2).

15. Training method (200) for a method, in particular according to any one of claims 1 to 11, for monitoring an access point (2), wherein the access point (2) includes an access gate (3), the training method (200) comprising the following steps:
• receiving (201), by the computing arrangement (4), sensor data from at least one sensor (10-13), preferably a plurality of sensors, the sensor(s) being configured to obtain information regarding the operation and/or state of the access point (2), and
• training (202) a machine-learning model based on the received sensor data as "historical sensor data" by assigning corresponding misadjustment information to the historical sensor data.
